# EUROPÄISCHE PATENTSCHRIFT

(11) **EP 2 212 125 B1**
(45) Veröffentlichungstag und Bekanntmachung des Hinweises auf die Patenterteilung: **23.03.2011**
(21) Anmeldenummer: 08787362.6
(22) Anmeldetag: 21.08.2008
(51) Int. Cl.: B60C 13/00

(54) **FAHRZEUGLUFTREIFEN MIT GESCHÜTZTER SEITENWANDBESCHRIFTUNG**
PNEUMATIC VEHICLE TIRE HAVING PROTECTED SIDE WALL MARKINGS
PNEUMATIQUE DE VÉHICULE AVEC UNE INSCRIPTION DE PAROI LATÉRALE PROTÉGÉE

(30) Priorität: 21.11.2007 DE 102007055434
(43) Veröffentlichungstag der Anmeldung: 04.08.2010
(73) Patentinhaber: Continental Reifen Deutschland GmbH, 30165 Hannover (DE)
(72) Erfinder: RITTWEGER, Stefan, 34559 Neuental (DE)
(74) Vertreter: Finger, Karsten
(86) Internationale Anmeldenummer: PCT/EP2008/060915
(87) Internationale Veröffentlichungsnummer: WO 2009/065631

(56) Entgegenhaltungen:
- EP-A- 1 625 952
- GB-A- 207 156
- US-A- 1 448 286
- US-A- 1 458 629

## Beschreibung

Die Erfindung betrifft einen Fahrzeugluftreifen mit einem Laufstreifen, zwei Seitenwänden und wenigstens einer Schutzrippe, welche auf der Oberfläche der Seitenwand über den Umfang der Seitenwand umläuft und wobei die Schutzrippe oberhalb und beabstandet zu einer Seitenwandbeschriftung oder einem Seitenwanddekor angeordnet ist.

Schutzrippen auf Reifenseitenwänden, welche oberhalb und beabstandet zu einer Seitenwandbeschriftung oder einem Seitenwanddekor zum Schutz vor Scheuerkontakten, wie beispielsweise Bordsteinkontakten, dieser Seitenwandbeschriftung oder dieses Seitenwanddekors angeordnet sind, sind im Stand der Technik bekannt. Die Beschriftung oder das Dekor sollen vor Scheuerkontakten geschützt werden, um deren Lesbarkeit über die Lebensdauer des Reifens zu erhalten, aber auch um Rissinitiierungen durch Kerbwirkungen zu verhindern. Die Schutzrippe ist üblicherweise ein Streifen oder Keil aus Gummi, welcher einteilig mit der Seitenwand verbunden ist, zumindest über einen Teil, meist über den Umfang der gesamten Reifenseitenwand umläuft und welcher eine größere Reliefhöhe als die übrige Reifenseitenwand aufweist. Die Querschnittskontur der Schutzrippe kann in unterschiedlichen Ausführungsformen unterschiedlich sein. Die Schutzrippe ist auf einer derartigen Querschnittshöhe der Reifenseitenwand angeordnet, auf der sie die Seitenwandbeschriftung oder das -Dekor vor seitlichen Scheuerkontakten schützen kann, indem die Schutzrippe diese Kontakte abfängt. Den vorgenannten Schutzrippen ist im üblichen gemein, dass sie, im Reifenquerschnitt betrachtet, eine über den Umfang des Reifens gleichbleibende untere und obere Kantenkontur aufweisen, wobei die untere und obere Kontur parallel zueinander verlaufen, so dass die Querschnittshöhe der Schutzrippe über den Reifenumfang gleich ist.

Eine gattungsbildende Schutzrippe ist aus der GB 207,156 A und aus der US 1,458,629 B bekannt geworden. Die Reifenseitenwand weist eine über den Umfang der Reifenseitenwand umlaufende Schutzrippe auf, welche die unterhalb dieser Schutzrippe angeordnete Seitenwandbeschriftung vor Scheuerkontakten schützt. Die Querschnittskontur der Schutzrippe ist über deren umfänglichen Verlauf über die Seitenwand gleich in Reliefhöhe und Querschnittshöhe.

Die vorgenannte Anordnung und Ausbildung von Schutzrippe und Seitenwandbeschriftung ist zudem aus der US 1,448,286 A bekannt.

Um die Beschriftungen oder Dekore der Seitenwand durch eine derartige, über den Seitenwandumfangsverlauf gleiche Querschnittskontur der Schutzrippe zuverlässig schützen zu können, muss die Schutzrippe eine vergleichsweise große Reliefhöhe aufweisen. Diese größere Reliefhöhe erfordert einen hohen Materialeinsatz und erhöht das Gewicht des Reifens unerwünscht.

Es ist die Aufgabe der Erfindung, einen Fahrzeugreifen mit einer die Seitenwandbeschriftung oder das Seitenwanddekor vor Scheuerkontakten schützenden Schutzrippe bereitzustellen, bei dem die Beschriftung oder das Dekor zuverlässig geschützt ist, aber nur einen geringen zusätzlichen Materialeinsatz erfordert und den Fahrzeugreifen somit nur unwesentlich in seinem Gewicht erhöht.

Die Aufgabe wird gelöst, indem die Schutzrippe eine untere Negativ-Kontur mit wenigstens einer Ausnehmung aufweist, welche entsprechend der Positiv-Kontur der der Schutzrippe zugewandten Seitenwandbeschriftung oder des Seitenwanddekors gestaltet ist, derart, dass die Schutzrippe zumindest einen Teil der oberen Hälfte der Seitenwandbeschriftung oder des Seitenwanddekors in der Ausnehmung aufnimmt. Erfindungswesentlich ist, dass der obere Bereich der Seitenwandbeschriftung oder des Seitenwanddekors eine Positiv-Kontur (oder auch Positiv-Relief) darstellt, welche in eine entsprechend gestaltete Ausnehmung in Form eines Negativreliefs / -Kontur, welche im unteren Schutzrippenbereich angeordnet ist, eingreift. Die Seitenwandbeschriftung greift somit in untere Ausnehmungen in der Schutzrippe ein, so dass das Dekor oder die Beschriftung quasi von der Schutzrippe in ihrem oberen Bereich "überdacht" ist, wodurch die Beschriftung oder das Dekor sehr zuverlässig vor Scheuerkontakten geschützt ist. Die Schutzrippe weist eine ebene obere Kontur ohne Ausnehmungen auf, während die untere Kontur Ausnehmungen zur Aufnahme von oberen Teilen der Seitenwandbeschriftung oder Seitenwanddekor aufweist.

Um die größtmögliche Schutzwirkung der Seitenwandbeschriftung oder des Seitenwanddekors gegen Scheuerkontakte zu erreichen, ist es vorteilhaft, wenn die Schutzrippe eine größere Reliefhöhe als die Seitenwandbeschriftung oder das Seitenwanddekor aufweist, vorzugsweise wenigstens eine um 0,3mm größere Reliefhöhe.

Die Schutzrippe ist, im Reifenquerschnitt betrachtet, zweckmäßigerweise innerhalb eines Höhenbereiches der Seitenwand angeordnet, der oberhalb der halben Höhe der Seitenwand und unterhalb des oberen Viertels der Seitenwandhöhe liegt. Dabei ist der der Felge zugewandte Querschnittshöhenbereich als unterer Teil benannt. Dieses ist aufgrund der Querschnittskontur des Reifens, insbesondere der Querschnittskontur von LKW-Reifen derjenige Bereich, der möglichen Scheuerkontakten ausgesetzt ist. Eine in diesem Bereich angeordnete Schutzrippe fängt diese Scheuerkontakte zuverlässig ab und schützt die unter der Schutzrippe angeordnete Beschriftung bzw. das Dekor.

In einer Ausführungsform ist jeder der Schutzrippe zugewandte Buchstabe oder jedes der Schutzrippe zugewandte Dekorelement in einer entsprechenden konturgleichen Ausnehmung in der Schutzrippe eingreifend angeordnet. Somit ist jeder einzelne Buchstabe eines Schriftzuges in einer gesonderten Ausnehmung angeordnet.

In einer anderen Ausführungsform ist der der Schutzrippe zugewandte gesamte Schriftzug oder das der Schutzrippe zugewandte Dekor in einer einzigen entsprechenden konturgleichen Ausnehmung in der Schutzrippe eingreifend angeordnet. Somit ist die gesamte Beschriftung in einer einzigen Ausnehmung angeordnet.

Der größtmögliche Schutz der Beschriftung bzw. des Dekors ist bei guter Lesbarkeit dann gegeben, wenn der Abstand zwischen der Ausnehmung in der unteren Kontur der Schutzrippe und der oberen Kontur eines Buchstabens oder eines Dekorelementes zwischen 1mm und 5mm, vorzugsweise 2mm bis 3mm beträgt.

Der Schutz der Buchstaben oder des Dekors ist weiterhin verbessert, wenn unterhalb der Buchstaben oder des Dekors wenigstens eine weitere umlaufende Schutzrippe zum Schutz der Buchstaben oder des Dekors angeordnet ist.

Weitere Merkmale, Vorteile und Einzelheiten der Erfindung werden anhand der Zeichnungen, die schematische Ausführungsbeispiele darstellen, näher erläutert. Es zeigen die:
- Fig.1: einen hälftigen Querschnitt durch einen erfindungsgemäßen Nutzfahrzeugreifen;
- Fig. 2: eine perspektivische Teilansicht der oberen Reifenseitenwand mit Scheuerleiste und Buchstabe.

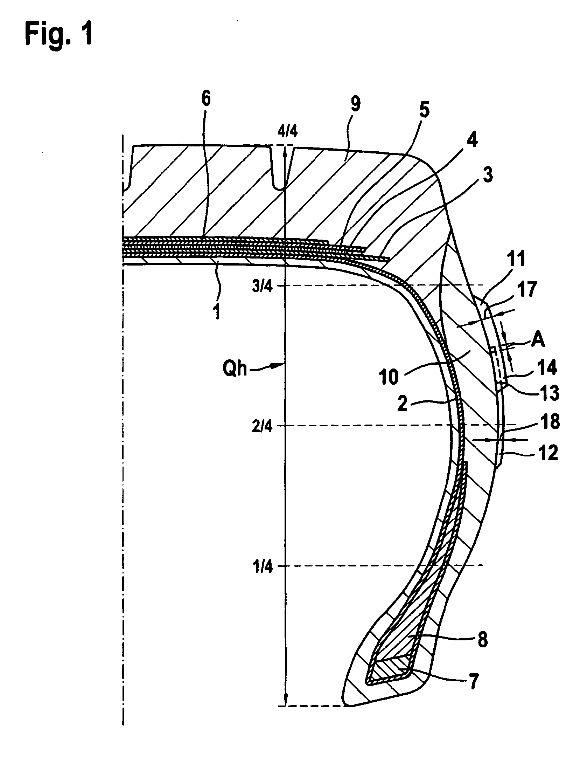

Die **Figur 1** zeigt einen Querschnitt durch einen Nutzfahrzeugreifen mit einer luftdichten Innenschicht 1, einer Karkasse 2, welche insbesondere Stahlkorde als Festigkeitsträger aufweist, mit einem aus vier Lagen 3, 4, 5 und 6 bestehenden Gürtelverband, Seitenwänden 10, Wulstbereichen mit Wulstkernen 7 und Kernprofilen 8 und einem Laufstreifen 9. Die Karkasse 2 ist eine Radialkarkasse, deren Stahlkorde im Wesentlichen parallel zueinander in radialer Richtung von Wulstbereich zu Wulstbereich verlaufen. Bei der dargestellten Ausführungsform ist die vierte, radial äußerste Gürtellage 6 am schmälsten von allen Lagen und bildet die sogenannte Schutzlage. Die erste Gürtellage 3 ist die Sperrlage, die zweite und die dritte Gürtellagen 4, 5 sind die sogenannten Arbeitslagen. Die Gürtellagen 3, 5 und 6 bestehen aus in eine Gummimischung, die Gürtelgummierung, eingebetteten Stahlkordfäden, welche in jeder der Lagen 3, 5 und 6 parallel zueinander verlaufen. Der Winkel, welchen die Stahlkordfäden in den Gürtellagen 3, 5 und 6 mit der Umfangsrichtung einschließen, wird insbesondere zwischen 16° und 25° gewählt. Die gegenseitige Anordnung der Stahlkordfäden in den Gürtellagen 3, 5 und 6 ist dabei derart betroffen, dass die Stahlkordfäden der aufeinander folgenden Gürtellagen einander kreuzen.

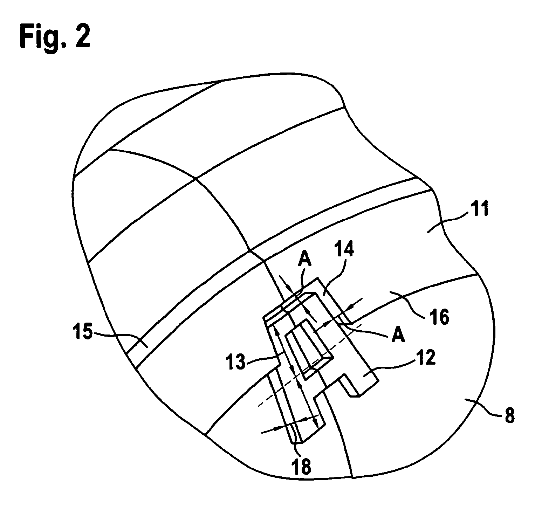

Eine Schutzrippe 11 ist auf der axial äußeren Oberfläche der Seitenwand 10 über den Umfang der Seitenwand umlaufend angeordnet. Die Schutzrippe 11 schützt die unterhalb und beabstandet zur Schutzrippe angeordnete Seitenwandbeschriftung 12 vor seitlichen Scheuerkontakten, wie beispielsweise vor Bordsteinkontakten, indem die Schutzrippe 11 diese Kontakte abfängt. Die **Figur 2** zeigt die Ausführungsform der Figur 1 in einer perspektivischen Teilansicht der oberen Reifenseitenwand 10 mit Schutzrippe 11 und Seitenwandbeschriftung 12 in Form eines Buchstaben. Gleiche Bauteile beider Figuren sind mit gleichen Bezugszeichen gekennzeichnet. Der obere Bereich der Seitenwandbeschriftung 13 stellt eine Positiv-Kontur (oder auch Positiv-Relief) dar, welche in eine entsprechend gestaltete Ausnehmung 14 in Form einer Negativkontur, welche im unteren Bereich der Schutzrippe angeordnet ist, eingreift. Die Seitenwandbeschriftung 12 greift somit in eine untere Ausnehmungen 14 in der Schutzrippe 11 ein, so dass die Beschriftung 12 quasi von der Schutzrippe 11 in ihrem oberen Bereich 13 "überdacht" ist, wodurch die Beschriftung oder das Dekor sehr zuverlässig vor Scheuerkontakten geschützt ist. Die Schutzrippe 11 weist eine ebene obere Kontur 15 ohne Ausnehmungen auf, während die untere Kontur 16 eine Ausnehmung 14 zur teilweisen Aufnahme des Buchstabens der Seitenwandbeschriftung 12 aufweist. Die Beschriftung 12 ist zur Gewährleistung einer guten optischen Erkennbarkeit der Beschriftung 12 maximal mit ihrer oberen Hälfte 13 in der Ausnehmung 14 der Schutzrippe 11 aufgenommen.

Die Schutzrippe 11 weist eine um 0,5mm größere Reliefhöhe 17 als die Reliefhöhe 18 Seitenwandbeschriftung 12 auf. Die Schutzrippe 12 ist innerhalb einer Querschnittshöhe Qh der Seitenwand 10 angeordnet, die oberhalb der halben Höhe Qh der Seitenwand 10 und unterhalb des oberen Viertels der Höhe Qh der Seitenwand 10 liegt. Der Abstand zwischen unterer Ausnehmungskontur der Schutzrippe 11 und der oberen Kontur eines Buchstabens 12 beträgt 3mm.

### Bezugszeichenliste

### (Teil der Beschreibung)

- 1: Innenschicht
- 2: Karkasse
- 3: Gürtellage
- 4: Gürtellage
- 5: Gürtellage
- 6: Gürtellage
- 7: Wulstkern
- 8: Wulstkemprofil
- 9: Laufstreifen
- 10: Seitenwand
- 11: Schutzrippe
- 12: Beschriftung
- 13: Oberer Bereich der Beschriftung
- 14: Ausnehmung
- 15: Obere Schutzrippenkontur
- 16: Untere Schutzrippenkontur
- 17: Reliefhöhe Schutzrippe
- 18: Reliefhöhe Beschriftung

- Qh: Querschnittshöhe Reifenseitenwand
- A: Abstand Schutzrippenkontur zur Buchstabenkontur

## Patentansprüche

1. Fahrzeugreifen,
mit einem Laufstreifen (1), zwei Seitenwänden (10) und wenigstens einer Schutzrippe (11), welche auf der Oberfläche der Seitenwand über den Umfang der Seitenwand umläuft und wobei die Schutzrippe (11) oberhalb und beabstandet zu einer Seitenwandbeschriftung (12) oder einem Seitenwanddekor angeordnet ist,
**dadurch gekennzeichnet, dass**
die Schutzrippe (11) eine untere Negativ-Kontur mit wenigstens einer Ausnehmung (14) aufweist, welche entsprechend der Positiv-Kontur der der Schutzrippe zugewandten Seitenwandbeschriftung (12) oder des Seitenwanddekors gestaltet ist, derart, dass die Schutzrippe (11) zumindest zum Teil die obere Hälfte der Seitenwandbeschriftung (12) oder des Seitenwanddekors in der Ausnehmung (14) aufnimmt.

2. Fahrzeugluftreifen nach Anspruch 1,
**dadurch gekennzeichnet, dass** die Schutzrippe (11) eine größere Reliefhöhe (17) als die Reliefhöhe der Seitenwandbeschriftung (18) oder das Seitenwanddekor aufweist, vorzugsweise wenigstens eine um 0,3mm größere Reliefhöhe.

3. Fahrzeugluftreifen nach einem oder mehreren der vorangehenden Ansprüche,
**dadurch gekennzeichnet, dass** die Schutzrippe (11) innerhalb eines Höhenbereiches der Seitenwand (Qh) angeordnet ist, der oberhalb der halben Höhe der Seitenwand und unterhalb des oberen Viertels der Seitenwandhöhe liegt.

4. Fahrzeugluftreifen nach einem oder mehreren der vorangehenden Ansprüche,
**dadurch gekennzeichnet, dass** jeder der Schutzrippe (11) zugewandte Buchstabe (12) oder jedes der Schutzrippe (11) zugewandte Dekorelement in eine entsprechende konturgleiche Ausnehmung (14) in der Schutzrippe (11) eingreifend angeordnet ist.

5. Fahrzeugluftreifen nach einem oder mehreren der vorangehenden Ansprüche,
**dadurch gekennzeichnet, dass** der der Schutzrippe (11) zugewandte Schriftzug (12) oder das der Schutzrippe (11) zugewandte Dekor in eine einzige entsprechende konturgleiche Ausnehmung (14) in der Schutzrippe (11) eingreifend angeordnet ist.

6. Fahrzeugluftreifen nach einem der vorangehenden Ansprüche,
**dadurch gekennzeichnet, dass** der Abstand (A) zwischen der unteren Kontur (16) der Schutzrippe und der oberen Kontur eines Buchstabens (12) oder eines Dekorelementes zwischen 1mm und 5mm, vorzugsweise 2mm bis 3mm beträgt.

7. Fahrzeugluftreifen nach einem oder mehreren der vorangehenden Ansprüche,
**dadurch gekennzeichnet, dass** unterhalb der Buchstaben (12) oder des Dekors wenigstens eine weitere umlaufende Schutzrippe zum Schutz der Buchstaben (12) oder des Dekors angeordnet ist.

## Claims

1. Vehicle tire,
having a profiled tread (1), two sidewalls (10) and at least one protective rib (11), which runs on the surface of the sidewall over the circumference of the sidewall, and wherein the protective rib (11) is disposed above and at a distance from a sidewall marking (12) or a sidewall decoration, **characterized in that** the protective rib (11) has a lower negative contour with at least one recess (14), which is configured to correspond to the positive contour of the sidewall marking (12) or the sidewall decoration facing the protective rib, in such a way that the protective rib (11) accommodates at least partly the upper half of the sidewall marking (12) or the sidewall decoration in the recess (14).

2. Pneumatic vehicle tire according to Claim 1, **characterized in that** the protective rib (11) has a greater relief height (17) than the relief height of the sidewall marking (18) or the sidewall decoration, preferably at least a relief height that is greater by 0.3 mm.

3. Pneumatic vehicle tire according to one or more of the preceding claims, **characterized in that** the protective rib (11) is disposed within a region of the height of the sidewall (Qh) that lies above half the height of the sidewall and below the upper quarter of the height of the sidewall.

4. Pneumatic vehicle tire according to one or more of the preceding claims, **characterized in that** each letter (12) facing the protective rib (11) or each decorative element facing the protective rib (11) is disposed in an engaging manner in a corresponding recess (14) of the same contour in the protective rib (11).

5. Pneumatic vehicle tire according to one or more of the preceding claims, **characterized in that** the inscription (12) facing the protective rib (11) or the decoration facing the protective rib (11) is disposed in an engaging manner in a single corresponding recess (14) of the same contour in the protective rib (11).

6. Pneumatic vehicle tire according to one or more of the preceding claims, **characterized in that** the distance (A) between the lower contour (16) of the protective rib and the upper contour of a letter (12) or a decorative element is between 1 mm and 5 mm, preferably 2 mm to 3 mm.

7. Pneumatic vehicle tire according to Claim 1, **characterized in that** at least one further peripheral protective rib is disposed below the letters (12) or the decoration to protect the letters (12) or the decoration.

## Revendications

1. Bandage pour roue de véhicule, présentant une bande de roulement (1), deux parois latérales (10) et au moins une nervure de protection (11) qui s'étend sur la surface de la paroi latérale sur tout le pourtour de la paroi latérale, la nervure de protection (11) étant disposée au-dessus et à distance d'une inscription (12) ou d'un décor prévus sur la paroi latérale,
**caractérisé en ce que**
la nervure de protection (11) présente un contour négatif doté d'au moins une découpe (14) qui est configurée en correspondance au contour positif de l'inscription (12) ou du décor de paroi latérale tournés vers la nervure de protection, de telle sorte que la nervure de protection (11) reprend au moins une partie de la moitié supérieure de l'inscription (12) ou du décor de la paroi latérale dans la découpe (14).

2. Bandage pour roue de véhicule selon la revendication 1, **caractérisé en ce que** la nervure de protection (11) présente un relief d'une hauteur (17) supérieure à la hauteur du relief de l'inscription (18) ou du décor de paroi latérale, et de préférence une hauteur de relief supérieure d'au moins 0,3 mm.

3. Bandage pour roue de véhicule selon l'une ou plusieurs des revendications précédentes, **caractérisé en ce que** la nervure de protection (11) est disposée à l'intérieur d'une plage de hauteur de la paroi latérale (Qh) située au-dessus de la moitié supérieure de la paroi latérale et en dessous du quart supérieur de la hauteur de la paroi latérale.

4. Bandage pour roue de véhicule selon l'une ou plusieurs des revendications précédentes, **caractérisé en ce que** chaque caractère d'écriture (12) tourné vers la nervure de protection (11) ou chaque élément décoratif tourné vers la nervure de protection (11) est disposé de manière à s'engager dans une découpe (14) de contour similaire ménagée dans la nervure de protection (11).

5. Bandage pour roue de véhicule selon l'une ou plusieurs des revendications précédentes, **caractérisé en ce que** les caractères d'écriture (12) tournés vers la nervure de protection (11) ou le décor tourné vers la nervure de protection (11) sont disposés de manière à s'engager dans une unique découpe (14) de contour correspondant ménagée dans la nervure de protection (11).

6. Bandage pour roue de véhicule selon l'une des revendications précédentes, **caractérisé en ce que** la distance (A) entre le contour inférieur (16) de la nervure de protection et le contour supérieur d'un caractère d'écriture (12) ou d'un élément décoratif est comprise entre 1 mm et 5 mm et de préférence entre 2 mm et 3 mm.

7. Bandage pour roue de véhicule selon l'une ou plusieurs des revendications précédentes, **caractérisé en ce qu'**au moins une autre nervure périphérique de protection est disposée en dessous du caractère d'écriture (12) ou du décor pour protéger le caractère d'écriture (12) ou le décor.
